# EUROPEAN PATENT APPLICATION

(11) **EP 4 769 449 A1**
(43) Date of publication of application: **01.07.2026**
(21) Application number: 24896457.9
(22) Date of filing: 25.11.2024
(51) Int. Cl.: H01B 12/02, H10N 60/01

(54) **PREPARATION METHOD FOR BRONZE-PROCESS NB3SN SUPERCONDUCTING WIRE, AND SUPERCONDUCTING WIRE**

(30) Priority: 27.11.2023 CN 202311585922
(71) Applicant: Xi'an Superconducting Wire Technologies Co., Ltd., Xi'an, Shaanxi 713703 (CN)
(72) Inventor: GUO, Qiang, Xi'an, Shaanxi 713703 (CN); ZHANG, Ke, Xi'an, Shaanxi 713703 (CN); WU, Bo, Xi'an, Shaanxi 713703 (CN); JU, Shuaiwei, Xi'an, Shaanxi 713703 (CN); CHEN, Tong, Xi'an, Shaanxi 713703 (CN); XUE, Yuxin, Xi'an, Shaanxi 713703 (CN); XIANG, Ruirui, Xi'an, Shaanxi 713703 (CN); LIU, Xianghong, Xi'an, Shaanxi 713703 (CN); FENG, Yong, Xi'an, Shaanxi 713703 (CN)
(74) Representative: Lin Chien, Mon-Yin
(86) International application number: PCT/CN2024/134110
(87) International publication number: WO 2025/113367

(57) **Abstract**

Disclosed in the present application are a preparation method for a bronze-process Nb₃Sn superconducting wire, and a superconducting wire. The preparation method comprises: placing a bronze rod into an Nb tube, placing the Nb tube into a bronze tube, and performing rotary swaging, drawing and annealing to prepare a bronze/Nb single core rod; bundling up hundreds of bronze/Nb single core rods in a hexagonal close-packed manner and then coating same with a barrier layer, and then placing the bronze/Nb single core rods into a copper tube to form a final billet; and heating the final billet and then sequentially performing extruding, drawing and intermediate annealing thereon, so as to obtain a bronze-process Nb₃Sn superconducting wire having ring-shaped core filaments. By means of the present application, an Nb core filament changes from a solid columnar shape to a hollow tubular shape, thereby increasing the interaction area between Nb and a bronze matrix, increasing the reaction rate of Nb with Sn in the bronze matrix during a phase-formation heat treatment, and shortening the reaction time.

## Description

### TECHNICAL FIELD

The present disclosure generally relates to the field of metal processing technologies, and especially relates to a preparation method for a bronze-process Nb₃Sn superconducting wire, and a superconducting wire.

### BACKGROUND

Bronze method niobium three tin (Nb₃Sn) superconducting wire is an important material for producing a high field magnet with a field strength greater than 10T. The magnet that is produced needs to be firstly wound and then perform heat treatment to generate Nb₃Sn superconducting phase. A reaction between tin (Sn) and niobium (Nb) is a solid-state diffusion reaction, with a very slow speed.

At present, Nb core filament mostly adopts a cylindrical structure, which has a limited contact area with a bronze substrate that is externally wrapped, thereby resulting in a long time for Sn and Nb to be fully reacted to form the Nb₃Sn superconducting phase.

### SUMMARY

An embodiment of the present disclosure provides a preparation method for a bronze-process Nb₃Sn superconducting wire, and a superconducting wire which can the problem that a long reaction time is occurred between a cylindrical Nb core filament and a bronze substrate in the related art.

On one hand, an embodiment of the present disclosure provides a preparation method for a bronze-process Nb₃Sn superconducting wire, which includes:
placing a bronze rod into an Nb tube, placing the Nb tube into a bronze tube, and performing rotary swaging, drawing and annealing to prepare a bronze/Nb single core rod;
bundling up a plurality of bronze/Nb single core rods in a hexagonal close-packed manner and then coating same with a barrier layer, and then placing the plurality of bronze/Nb single core rods into a copper tube to form a final billet; and
sequentially performing extruding, drawing and annealing on the final billet, to obtain a bronze-process Nb₃Sn superconducting wire.

On the other hand, an embodiment of the present disclosure provides a bronze-process Nb3Sn superconducting wire is prepared by the above preparation method.

The preparation method for the bronze-process Nb₃Sn superconducting wire, and the superconducting wire provided by the present disclosure has the following advantages:
the shape of the Nb core filament is a circular tube-shaped, and the contact area between the bronze substrate and Nb is increased, which is conducive to the reaction between Sn and Nb during performing heat treatment, and a time of performing heat treatment can be shortened by more than 20%.

### BRIEF DESCRIPTION OF THE DRAWINGS

In order to more clearly understand the technical solution hereinafter in embodiments of the present disclosure or the related art, a brief description to the drawings used in detailed description of embodiments or the related art hereinafter is provided thereof. Obviously, the drawings described below are some embodiments of the present disclosure, for one of ordinary skill in the related art, other drawings can be obtained according to the drawings below on the premise of no creative work.

FIG. 1 is a schematic view of a bronze/Nb single core rod according to an embodiment of the present disclosure.

FIG. 2 is a schematic view of a superconducting wire according to an embodiment of the present disclosure.

The element labels according to the embodiment of the present disclosure shown as below:
1-bronze tube, 2-bronze rod, 3-Nb tube, 4-copper tube, 5-barrier layer, 6-bronze/Nb single core rod.

### DETAILED DESCRIPTION

Reference will now be made in detail to embodiments, examples of which are illustrated in the accompanying drawings. Obviously, the implementation embodiment in the description is a part of the present disclosure implementation examples, rather than the implementation of all embodiments, examples. According to the described exemplary embodiment of the present disclosure, all other embodiments obtained by one of ordinary skill in the related art on the premise of no creative work are within the protection scope of the present disclosure.

A preparation method for a bronze-process Nb₃Sn superconducting wire according to an embodiment of the present disclosure is provided. The preparation method includes the following steps.

Step S100, placing a bronze rod 2 into an Nb tube 3, placing the Nb tube 3 into a bronze tube 1, and performing rotary swaging, drawing and annealing to prepare a bronze/Nb single core rod 6.

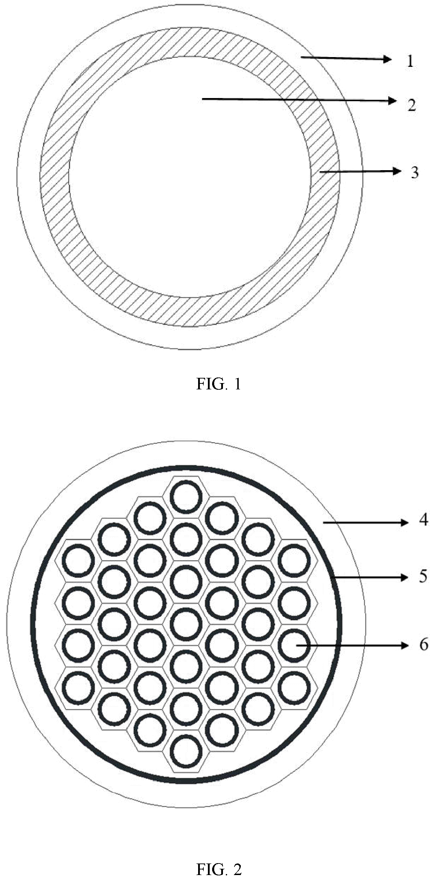

Illustratively, the outside of the Nb tube 3 is the bronze tube 1 and the bronze rod 2 is filled inside the Nb tube 3. The Nb tube 3 is made of Nb simple substance or Nb alloy, such as NbTi, NbTa, etc. A dimensional accuracy of the Nb tube 3 satisfies ±0.03 mm, a surface roughness Ra is less than or equal to 0.8 µm, and a yield strength is more than 80 MPa. when processing the bronze tube 1 that is filled with the Nb tube 3, if a diameter of the bronze tube 1 is greater than or equal to 15 mm, a rotary forging mode is used with a deformation of more than or equal to 30 % per deformation, and if the diameter of the bronze tube 1 is less than 15 mm, the drawing mode is used with a deformation of more than or equal to 30% per deformation. In obtaining the bronze/Nb single core rod 6 with a circular Nb core filament, a volume ratio of bronze to Nb is 1.0 to 5.0. A structure of the bronze/Nb single core rod 6 that is prepared is shown in FIG. 1.

Step S110, bundling up a plurality of bronze/Nb single core rods 6 in a hexagonal close-packed manner and then coating same with a barrier layer 5, and then placing the plurality of bronze/Nb single core rods into a copper tube 4 to form a final billet.

Illustratively, the barrier layer 5 is made of Nb or Ta. In the final billet that is prepared, a ratio of a sum of radial cross-sectional areas of the bundled bronze/Nb single core rod 6 and the barrier layer 5 to a radial cross-sectional area of the copper tube 4 is 1.0 to 4.0.

Step S120, sequentially performing extruding, drawing and intermediate annealing on the final billet, to obtain the bronze-process Nb₃Sn superconducting wire.

A bronze-process Nb₃Sn superconducting wire according to an embodiment of the present disclosure is provided. The bronze-process Nb₃Sn superconducting wire is prepared by the above preparation method.
1. placing a Nb tube with a dimensional deviation of +0.03 mm, a surface roughness Ra of 0.8 µm, and a yield strength of 95 MPa into a bronze tube, and then placing a bronze rod into the Nb tube. When a diameter of the bronze tube is equal to or more than 15 mm, Processing the bronze tube using a rotary forging mode with a single deformation of 30%, followed by a drawing mode with a single deformation of 35%, to obtain a bronze/Nb single core rod with a ring-shaped Nb core filament, wherein a volume ratio of bronze to Nb is 1.0.
2. bundling up hundreds of bronze/Nb single core rods in a hexagonal close-packed manner and then coating same with a layer of a barrier layer Nb, and then fill into an oxygen free copper tube to obtain the final billet. A ratio of the sum of cross-sectional areas of the bronze/Nb single core rod and the barrier layer Nb to a cross-sectional area of the oxygen free copper tube is 1.0. Heating the final billet and then sequentially performing extruding, drawing and annealing on the final billet, to obtain the bronze-process Nb₃Sn superconducting wire.

### Another embodiment

A preparation method for a bronze-process Nb₃Sn superconducting wire of the present disclosure is provided. The preparation method includes the following steps:
1. placing a Nb2Ti tube with a dimensional deviation of +0.01 mm, a surface roughness Ra of 0.8 µm, and a yield strength of 83 MPa into a bronze tube, and then placing a bronze rod into a NbTi tube. When a diameter of the bronze tube is equal to or more than 15 mm, Processing the bronze tube using a rotary forging mode with a single deformation of 35%, followed by a drawing mode with a single deformation of 30%, to obtain a bronze/ NbTi single core rod with a ring-shaped NbTi core filament, wherein a volume ratio of bronze to NbTi is 3.0.
2. bundling up hundreds of bronze/NbTi single core rods in a hexagonal close-packed manner and then coating same with a layer of a barrier layer Ta, and then fill into an oxygen free copper tube to obtain the final billet. A ratio of the sum of cross-sectional areas of the bronze/ NbTi single core rod and the barrier layer Ta to a cross-sectional area of the oxygen free copper tube is 2.0. Heating the final billet and then sequentially performing extruding, drawing and annealing on the final billet, to obtain the bronze-process Nb₃Sn superconducting wire.

### Another embodiment

A preparation method for a bronze-process Nb₃Sn superconducting wire of the present disclosure is provided. The preparation method includes the following steps:
1. placing a Nb tube with a dimensional deviation of -0.03 mm, a surface roughness Ra of 0.8 µm, and a yield strength of 88 MPa into a bronze tube, and then placing a bronze rod into a Nb1.5T tube. When a diameter of the bronze tube is equal to or more than 15 mm, Processing the bronze tube using a rotary forging mode with a single deformation of 33%, followed by a drawing mode with a single deformation of 38%, to obtain a bronze/NbTa single core rod with a ring-shaped NbTa core filament, wherein a volume ratio of bronze to NbTa is 5.0.
2. bundling up hundreds of bronze/NbTa single core rods in a hexagonal close-packed manner and then coating same with a layer of a barrier layer Nb, and then fill into an oxygen free copper tube to obtain the final billet. A ratio of the sum of cross-sectional areas of the bronze/NbTa single core rod and the barrier layer Nb to a cross-sectional area of the oxygen free copper tube is 4.0. Heating the final billet and then sequentially performing extruding, drawing and annealing on the final billet, to obtain the bronze-process Nb₃Sn superconducting wire.

### Verification experiment

The bronze-process Nb₃Sn Superconducting wires that are prepared by the preparation methods of the first embodiment to the third embodiment of the present disclosure above mentioned are compared with the Nb₃Sn superconducting wires that are not prepared by the preparation method of the present disclosure, the bronze-process Nb₃Sn superconducting wires that are prepared by the preparation methods of the first embodiment to the third embodiment of the present disclosure can be fully reacted to form the Nb₃Sn phase after being performed heat treatment at a temperature of 650 °C for 75 hours. In contrast, the Nb₃Sn superconducting wires that are not prepared by the preparation method of the present disclosure are performed heat treatment at a temperature of 650 °C for 100 hours, there is still a small amount of residue in the center of the Nb core filament. It can be seen that the preparation method of the present disclosure can effectively shorten the time of heat treatment.

Although the preferred embodiments of the present disclosure have been described, any additional changes and modifications to these embodiments can made by one of ordinary skill in the related art once the basic inventive concept of the present disclosure is known. Therefore, the attached claims are intended to be interpreted as including preferred embodiments and all changes and modifications that fall within the protection scope of the present disclosure.

Obviously, one of ordinary skill in the related art can make various modifications and variations to the present disclosure without departing from the spirit and scope of the present disclosure. In this way, if these modifications and variations of the present disclosure fall within the scope of the appended claims and equivalent technologies of the present disclosure, then the present disclosure is also intended to include these modifications and variations.

## Claims

1. A preparation method for a bronze-process Nb3Sn superconducting wire, **characterized in that**, comprising:
placing a bronze rod (2) into an Nb tube (3), placing the Nb tube (3) into a bronze tube (1), and performing rotary swaging, drawing and annealing to prepare a bronze/Nb single core rod (6); bundling up a plurality of bronze/Nb single core rods (6) in a hexagonal close-packed manner and then coating same with a barrier layer (5), and then placing the plurality of bronze/Nb single core rods into a copper tube (4) to form a final billet; and sequentially performing extruding, drawing and annealing on the final billet, to obtain a bronze-process Nb₃Sn superconducting wire.

2. The preparation method for a bronze-process Nb3Sn superconducting wire as claimed in claim 1, **characterized in that**, in the bronze/Nb single core rod (6), a volume ratio of bronze to Nb is 1.0 to 5.0, and the Nb core filament in the bronze/Nb single core rod (6) is ring-shaped.

3. The preparation method for a bronze-process Nb3Sn superconducting wire as claimed in claim 1, **characterized in that**, the Nb tube (3) is made of Nb simple substance or Nb alloy, and a dimensional accuracy of the Nb tube (3) satisfies ±0.03 mm, a surface roughness Ra is less than or equal to 0.8 µm, and a yield strength is more than 80 MPa.

4. The preparation method for a bronze-process Nb3Sn superconducting wire as claimed in claim 1, **characterized in that**, when processing the bronze tube (1) that is filled with the Nb tube (3), if a diameter of the bronze tube (1) is greater than or equal to 15 mm, a rotary forging mode is used with a deformation of more than or equal to 30 % per deformation, and if the diameter of the bronze tube (1) is less than 15 mm, the drawing mode is used with a deformation of more than or equal to 30% per deformation.

5. The preparation method for a bronze-process Nb3Sn superconducting wire as claimed in claim 1, **characterized in that**, a ratio of a sum of radial cross-sectional areas of the bronze/Nb single core rod (6) and the barrier layer (5) to a radial cross-sectional area of the copper tube (4) is 1.0 to 4.0.

6. A bronze-process Nb₃Sn superconducting wire, **characterized in that**, the bronze-process Nb₃Sn superconducting wire is prepared by the preparation method as claimed in any one of claims 1 to 5.
